# EUROPÄISCHE PATENTSCHRIFT

(11) **EP 4 446 784 B1**
(45) Veröffentlichungstag und Bekanntmachung des Hinweises auf die Patenterteilung: **20.05.2026**
(21) Anmeldenummer: 23167283.3
(22) Anmeldetag: 11.04.2023
(51) Int. Cl.: G01V 8/20, G01V 8/22

(54) **OPTISCHER SENSOR**
OPTICAL SENSOR
CAPTEUR OPTIQUE

(43) Veröffentlichungstag der Anmeldung: 16.10.2024
(73) Patentinhaber: Leuze electronic GmbH + Co. KG, 73277 Owen/Teck (DE)
(72) Erfinder: Feller, Bernhard, 86316 Friedberg (DE)
(74) Vertreter: Ruckh, Rainer Gerhard

(56) Entgegenhaltungen:
- EP-A1- 1 600 684
- DE-A1- 102007 050 097
- US-A1- 2023 052 882

## Beschreibung

Die Erfindung betrifft einen optischen Sensor und ein Verfahren zum Betrieb eines optischen Sensors.

Derartige optische Sensoren können zur Erfassung von Objekten in einem Überwachungsbereich eingesetzt werden. Beispiele für derartige optische Sensoren sind Lichtvorhänge und Lichtschranken.

In beiden Fällen weist der optische Sensor zwei Sensoreinheiten an gegenüberliegenden Rändern des Überwachungsbereichs auf. In einer ersten Sensoreinheit befinden sich der oder die Lichtstrahlen emittierenden Sender des optischen Sensors. In der zweiten Sensoreinheit befinden sich der oder die Lichtstrahlen empfangenden Empfänger sowie eine Auswerteeinheit zur Auswertung der Empfangssignale des oder der Empfänger.

Derartige optische Sensoren arbeiten nach dem Lichtschrankenprinzip. Bei freiem Überwachungsbereich treffen die Lichtstrahlen des oder jedes Senders ungehindert auf einen diesem zugeordneten Empfänger. Bei einem Objekteingriff im Überwachungsbereich werden die Lichtstrahlen des oder eines Senders unterbrochen, was in der Auswerteeinheit registriert wird. In der Auswerteeinheit wird abhängig von den Empfangssignalen des oder der Empfänger ein Objektfeststellungssignal generiert. Das Objektfeststellungssignal ist insbesondere ein binäres Schaltsignal, dessen Schaltzustände angeben, ob sich ein Objekt im Überwachungsbereich befindet oder nicht.

Vor dem Arbeitsbetrieb des optischen Sensors, in welchem eine Objekterfassung im Überwachungsbereich durchgeführt wird, müssen die Sensoreinheiten justiert werden, so dass die Lichtstrahlen des oder der Sender auf den oder die zugeordneten Empfänger ausgerichtet sind.

Diese Justage ist dadurch erschwert, da der oder die Sender typischerweise Lichtstrahlen im nicht sichtbaren Wellenlängenbereich, insbesondere im Infrarotbereich emittieren.

Daher muss der optische Sensor geeignete Justagemittel aufweisen. Beispielsweise kann wenigstens einem Empfänger oder einer Anordnung von Ausrichtempfängern eine Anzeigeeinheit zugeordnet sein. Die Anzeigeeinheit zeigt dann die Lichtmenge der Lichtstrahlen eines Senders an, die am Empfänger oder den Ausrichtempfängern registriert wird. Anhand der an der Anzeigeeinheit angezeigten Lichtmenge kann ein Benutzer die Justage des optischen Sensors durchführen.

Nachteilig hierbei ist, dass die Sensoreinheiten vorab grob ausgerichtet sein müssen, damit Lichtstrahlen eines Senders überhaupt auf den Empfänger oder die Ausrichtempfänger auftreffen und damit an der Anzeigeeinheit eine Lichtmengenanzeige erfolgt.

Da die Lichtstrahlen des optischen Sensors nicht sichtbar sind, gestaltet sich diese Grobausrichtung schwierig. Ein Benutzer muss per Trial-and-Error eine Grobausrichtung der Sensoreinheit finden, was umständlich und zeitaufwändig ist.

Die US 2023/0052882 A1 betrifft einen Lichtvorhang mit zwei in getrennten Gehäusen Sensoreinheiten, die Lichtstrahlen emittierende Sender und Lichtstrahlen empfangende Empfänger aufweisen. Zur Ausrichtung der Sensoreinheiten können an dieser Aussichtsmodule angesteckt werden. Ein Ausrichtmodul emittiert sichtbare Rechtstrahlen. Ein zweites Aussichtsmodul ist ein aktives Indikatormodul, das den Ort der auftreffenden Richtstrahlen anzeigt.

Die DE 10 2007 050 097 A1 betrifft einen optischen Sensor umfassend eine Lichtquelle und eine strukturierte Frontscheibe, welche den gebündelten Lichtstrahl der Lichtquelle mindestens in einer Richtung aufweitet. Die Struktur umfasst bei einer vorteilhaften Ausgestaltung ein Array mit mehreren Zylinderlinsen. Sie wird vorzugsweise durch Heißprägen der Oberfläche der Frontscheibe ausgebildet. Der aufgeweitete Lichtstrahl eignet sich besonders zur Erfassung schmaler Objekte oder Kanten. Die Lichtquelle und die Frontscheibe werden je relativ zum Sensorgehäuse ausgerichtet.

Der Erfindung liegt die Aufgabe zugrunde, eine einfache und zuverlässige Justage eines optischen Sensors der eingangs genannten Art zu ermöglichen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen optischen Sensor mit wenigstens einem Lichtstrahlen emittierenden Sender, wenigstens einem Lichtstrahlen empfangenden Empfänger und einer Auswerteeinheit, die zur Auswertung von Empfangssignalen des wenigstens eines Empfängers ausgebildet ist. Der optische Sensor weist zwei in Abstand gegenüberliegend angeordnete Sensoreinheiten auf, in welchen der wenigstens eine Sender und wenigstens eine Empfänger und die Auswerteeinheit integriert und vorhanden sind, wobei die Lichtstrahlen zwischen den Sensoreinheiten verlaufen. An wenigstens einer Seitenwand wenigstens einer Sensoreinheit ist eine mechanische Ausrichtstruktur vorhanden, die eine anvisierbare, in Richtung einer optischen Achse dieser Sensoreinheit verlaufende Zielgeometrie, ausbildet. Die optische Achse einer Sensoreinheit (1a, 1b, 8a) verläuft in deren Richtung. Die Zielgeometrie (12) einer mechanischen Ausrichtstruktur ist von einer optischen Achse eines Senders (5) oder Empfängers (6) gebildet.

Die Erfindung betrifft auch ein entsprechendes Verfahren.

Die an wenigstens einer Seitenwand einer Sensoreinheit vorhandene mechanische Ausrichtstruktur ermöglicht eine einfache und gleichzeitig effiziente Ausrichtung der Sensoreinheiten des optischen Sensors zueinander, insbesondere auch für den Fall, dass der oder die Sender des optischen Sensors Lichtschranken im nichtsichtbaren Wellenlängenbereich, insbesondere im Infrarotbereich, emittieren.

Ein wesentlicher Vorteil besteht dabei darin, dass keinerlei optoelektronische oder elektronische Bauelemente zur Ausbildung einer Ausrichteinheit benötigt werden. Vielmehr wird nur eine Ausrichtstruktur als rein mechanisches Element zur Ausrichtung benötigt, dass an einer Seitenwand einer Sensoreinheit vorhanden, insbesondere befestigt ist. Die so gebildete mechanische Ausrichtstruktur weist einen einfachen, robusten und kostengünstigen Aufbau auf.

Das Funktionsprinzip der erfindungsgemäßen mechanischen Ausrichtstruktur ist derart, dass diese eine Zielgeometrie ausbildet, die in Richtung einer optischen Achse der Sensoreinheit verläuft, vorteilhaft parallel zu dieser, gibt die Zielgeometrie ein direktes Maß für die Orientierung der optischen Achse. Die Funktion ist dabei derart, dass ein Benutzer die Zielgeometrie anvisiert, d.h. ein Auge vor die Zielgeometrie hält. Mit der Zielgeometrie kann so der Benutzer die gegenüberliegenden Sensoreinheiten anvisieren, d.h. die Zielgeometrie vorzugsweise auf einen Fixpunkt der gegenüberliegenden Sensoreinheit ausrichten, wodurch auf einfache Weise eine Ausrichtung der Sensoreinheiten zueinander bewerkstelligt werden kann.

Gemäß einer besonders vorteilhaften Ausführungsform ist an jeder Sensoreinheit wenigstens eine mechanische Ausrichtstruktur vorhanden.

Ein Vorteil dieser Ausführungsform ist, dass jede Sensoreinheit durch Nutzung ihrer mechanischen Ausrichtstruktur auf die jeweils andere Sensoreinheit ausgerichtet werden kann.

Ein weiterer Vorteil dieser Ausführungsform besteht darin, dass jeweils eine Sensoreinheit durch Nutzung dieser Zielgeometrie auf die Zielgeometrie der anderen Sensoreinheit ausgerichtet werden kann, d.h. die Zielgeometrie der anderen Sensoreinheit bildet ein Ziel, dass durch die Zielgeometrie der mechanischen Ausrichtstruktur der ersten Sensoreinheit anvisiert werden kann. Dadurch ist ein definierter Bezugspunkt für die Ausrichtung gegeben.

Gemäß einer vorteilhaften Ausführungsform weist jede Sensoreinheit eine Frontseite auf, über welche die Lichtstrahlen geführt sind. Die oder jede mechanische Ausrichtstruktur ist an einer an die Frontseite angrenzenden Seitenwand einer Sensoreinheit vorhanden.

Dabei kann besonders vorteilhaft eine mechanische Ausrichtstruktur an der Oberseite der Sensoreinheit angebracht sein. Alternativ oder zusätzlich kann eine mechanische Ausrichtstruktur seitlich an der Sensoreinheit angeordnet sein. Je nach Anbringung der mechanischen Ausrichtstruktur kann in unterschiedlichen Richtungen ein Ziel der gegenüberliegenden Sensoreinheit anvisiert werden. Durch eine Kombination mehrerer mechanischer Ausrichtstrukturen an einer Sensoreinheit kann eine Ausrichtung in unterschiedlichen Richtungen erfolgen.

Die Begriffe Oberseite und Unterseite sind in Bezug auf die in der Sensoreinheit angeordneten Sensorkomponenten definiert und ggf. auf Befestigungsmittel bezogen, mit denen die Sensoreinheit an einer Unterlage, Wand oder dergleichen montiert werden kann.

Vorteilhaft bildet die oder jede Seitenwand einer Sensoreinheit, an welcher die mechanische Ausrichtstruktur vorhanden ist, eine ebene Fläche aus.

Auf der ebenen Fläche kann die Zielgeometrie gut anvisierbar angebracht werden.

Gemäß einer ersten Variante weist umfasst der optische Sensor eine erste Sensoreinheit, in welcher wenigstens ein Lichtstrahlen emittierender Sender vorhanden ist, und eine zweite Sensoreinheit, in welcher ein Lichtstrahlen empfangender Empfänger vorhanden ist.

Zweckmäßig weist jede Sensoreinheit ein Gehäuse auf, wobei an wenigstens einer Seitenwand wenigstens eines Gehäuses eine mechanische Ausrichtstruktur vorhanden ist.

Dieser optische Sensor kann zur Erfassung von Objekten in einem Überwachungsbereich dienen, wobei der optische Sensor dann nach dem Lichtschrankenprinzip arbeitet. Die Sensoreinheiten befinden sich dann an gegenüberliegenden Rändern des Überwachungsbereichs. In der Auswerteeinheit wird dann als Objektfeststellungssignal vorteilhaft ein binäres Schaltsignal generiert, dessen Schaltzustände angeben, ob sich ein Objekt im Überwachungsbereich befindet oder nicht.

Dieser optische Sensor kann als Lichtschranke ausgebildet sein, wobei dieser dann nur einen Sender und einen Empfänger aufweist. Weiterhin kann dieser optische Sensor auch als Lichtvorhang ausgebildet sein. Dann ist in der ersten Sensoreinheit eine Reihenanordnung von Lichtstrahlen emittierenden Sendern vorhanden. In der zweiten Sensoreinheit ist entsprechend eine Reihenanordnung von Empfängern und die Auswerteeinheit vorhanden.

Generell werden bei diesem Sensortyp Objekte durch Unterbrechung des Strahlengangs von Lichtstrahlen erfasst.

Alternativ kann der optische Sensor auch eine Datenlichtschranke ausbilden. Dann sendet der Sender der Datenlichtschranke Lichtstrahlen, in welchen Daten kodiert sind, an den zugeordneten Empfänger. In der Auswerteeinheit erfolgt durch Auswertung der Empfangssignale eine Dekodierung der Daten.

Gemäß einer zweiten Variante weist der optische Sensor eine erste Sensoreinheit auf, in welcher wenigstens ein Lichtstrahlen emittierender Sender und wenigstens ein Lichtstrahlen empfangender Empfänger vorhanden sind. Eine zweite Sensoreinheit ist von einem Reflektor gebildet.

Zweckmäßig weist die erste Sensoreinheit ein Gehäuse auf, wobei an wenigstens einer Seitenwand des Gehäuses eine mechanische Ausrichtstruktur vorhanden ist. Alternativ oder zusätzlich ist an einem Rahmen des Reflektors eine mechanische Ausrichtstruktur vorhanden.

Auch dieser optische Sensor kann zur Erfassung von Objekten in einem Überwachungsbereich dienen, wobei der optische Sensor in diesem Fall nach dem Reflexionslichtschrankenprinzip arbeitet. Auch in diesem Fall befinden sich die Sensoreinheiten an gegenüberliegenden Rändern des Überwachungsbereichs.

In der Auswerteeinheit wird wieder ein Objektfeststellungssignal in Form eines binären Schaltsignals generiert dessen Schaltzustände angeben, ob sich ein Objekt im Überwachungsbereich befindet oder nicht.

Der optische Sensor kann als Reflexions-Lichtschranke ausgebildet sein und weist dann nur einen Sender und einen Empfänger auf. Der optische Sensor kann auch als Reflexions-Lichtvorhang mit mehreren Sender-Empfängerpaaren ausgebildet sein.

Alternativ kann dieser Sensortyp auch als Distanzsensor ausgebildet sein, wobei dann gegen den Reflektor Distanzmessungen durchgeführt werden. Die Distanzmessungen können beispielsweise nach einem Impuls-Laufzeit-Verfahren oder einem Phasenmessverfahren erfolgen.

Die optische Achse einer Sensoreinheit, in deren Richtung die Zielgeometrie einer mechanischen Ausrichtstruktur verläuft, ist von einer optischen Achse eines Senders oder Empfängers gebildet.

Bei einem einen Reflektor aufweisenden optischen Sensor ist die optische Achse einer Sensoreinheit, in deren Richtung die Zielgeometrie einer mechanischen Ausrichtstruktur verläuft, von der optischen Achse des Reflektors gebildet. Dabei weist der Reflektor eine ebene Reflektorfläche auf, wobei der Normalenvektor der Reflektorfläche die optische Achse des Reflektors bildet.

Gemäß einer vorteilhaften Ausführungsform ist die Zielgeometrie von einer Kerben- und/oder Kantenstruktur gebildet.

Die Kerben- und Kantenstruktur verläuft entlang einer Linie, die in Richtung einer optischen Achse, insbesondere parallel zu dieser optischen Achse, verläuft. Diese Struktur gibt geometrisch eindeutig eine Zielgeometrie vor, die von einem Benutzer einfach erkannt und anvisiert werden kann.

Gemäß einer ersten Variante ist die Zielgeometrie von einer in Richtung der optischen Achse verlaufenden, kontinuierlichen Kerben- oder Kantenstruktur gebildet.

Die Zielgeometrie bildet dann eine durchgehende Linienstruktur.

Gemäß einer zweiten Variante weist die Zielgeometrie mehrere in Richtung der optischen Achse hintereinander angeordnete, diskrete Zielgeometrieelement auf, die eine Kerben- oder Kantenstruktur aufweisen.

Die Zielgeometrieelemente bilden dann eine unterbrochene Linienstruktur aus. Das Anvisieren einer solchen Zielgeometrie erfolgt nach dem Kimme-Korn-Prinzip.

In beiden Fällen erstreckt sich die Zielgeometrie einer mechanischen Ausrichtstruktur über den Großteil der in Richtung der optischen Achse verlaufenden Ausdehnung der Seitenwand der Sensoreinheit.

Ein Großteil bedeutet, dass sich die Zielgeometrie wenigstens über 30% der Ausdehnung der Sensoreinheit in Richtung der optischen Achse erstreckt.

Vorteilhaft erfolgt mittels der oder jeder mechanischen Ausrichtstruktur eine Grobausrichtung der Sensoreinheit des optischen Sensors.

Danach kann eine Feinjustage der Sensoreinheit erfolgen, wobei diese hierfür geeignete Justagemittel aufweisen. Beispielsweise kann in der Sensoreinheit, in welcher der oder die Empfänger integriert sind, eine Anzeigeeinheit vorgesehen sein. In der Auswerteeinheit werden die auf den oder die Empfänger auftreffenden Lichtmengen der Lichtstrahlen der Sender registriert und ausgewertet. Dabei wird anhand der registrierten Lichtmengen die Ausrichtgüte bei der Justage der Sensoreinheit zeitabhängig bestimmt und an der Anzeigeeinheit visualisiert, so dass ein Benutzer den Stand der Justage verfolgen kann.

Auch ist es möglich, direkt benachbart zu dem oder den Empfängern Ausrichtempfänger vorzusehen, wobei dabei die Ausrichtgüte anhand der auf den oder die Ausrichtempfänger auftreffenden Lichtmengen der Lichtstrahlen der Sender oder weiterer Hilfssender ermittelt wird.

Die Erfindung wird im Folgenden anhand der Zeichnungen erläutert. Es zeigen:
- Figur 1a-b:: Erstes Ausführungsbeispiel des erfindungsgemäßen optischen Sensors bei zwei Ausrichtvorgängen.
- Figur 2a-b:: Zweites Ausführungsbeispiel des erfindungsgemäßen optischen Sensors bei zwei Ausrichtvorgängen.
- Figur 3:: Erstes Ausführungsbeispiel einer mechanischen Ausrichtstruktur mit einer Zielgeometrie.
- Figur 4a-c:: Querschnittsdarstellungen unterschiedlicher mechanischer Ausrichtstrukturen gemäß Figur 3.
- Figur 5:: Zweites Ausführungsbeispiel einer mechanischen Ausrichtstruktur mit einer Zielgeometrie.
- Figur 6a-d:: Querschnittsdarstellungen von Zielgeometriekanälen der mechanischen Ausrichtstrukturen gemäß Figur 4.

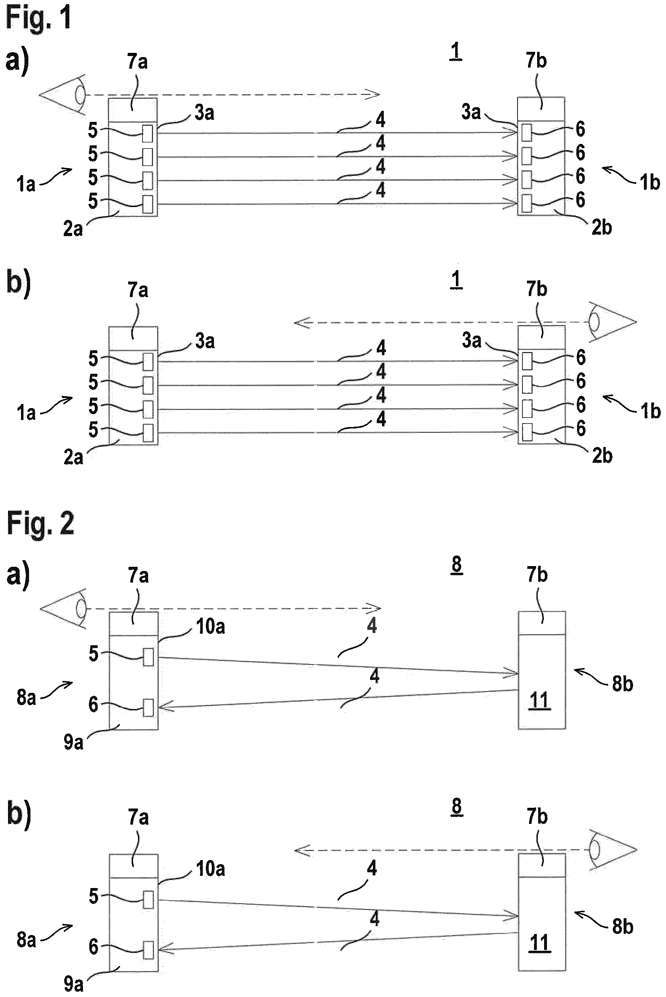

Die Figuren 1a, 1b zeigen ein erstes Ausführungsbeispiel des erfindungsgemäßen optischen Sensors in Form eines Lichtvorhangs 1. Der Lichtvorhang 1 dient zur Erfassung von Objekten in einem Überwachungsbereich. Der Lichtvorhang 1 weist zwei Sensoreinheiten 1a, 1b auf, die an gegenüberliegenden Rändern des Überwachungsbereichs angeordnet sind. Jeder der Sensoreinheiten 1a, 1b weist ein Gehäuse 2a, 2b auf, in welchem Sensorkomponenten vorhanden sind. In der dem Überwachungsbereich zugewandten Frontseite jedes Gehäuses 2a, 2b befindet sich ein Austrittsfenster 3a, 3b.

In der ersten Sensoreinheit 1a befindet sich eine Reihenanordnung von Lichtstrahlen 4 emittierenden Sendern 5, die von einer nicht dargestellten Sendersteuerung gesteuert werden. Die Sender 5 emittieren Lichtstrahlen 4 im nicht sichtbaren Wellenlängenbereich, insbesondere im Infrarotbereich. In der zweiten Sensoreinheit 1b befindet sich eine Reihenanordnung von Lichtstrahlen 4 empfangenden Empfängern 6. In der zweiten Sensoreinheit 1b befindet sich zudem eine nicht dargestellte Auswerteeinheit, die der Betrieb der Empfänger 6 steuert und die in den Empfängern 6 generierten Empfangssignale auswertet.

Im vorliegenden Fall sind vier Sender 5 und vier Empfänger 6 vorgesehen, wobei jeweils ein Sender 5 mit einem zugeordneten Empfänger 6 ein Sender-Empfänger-Paar bildet. Natürlich kann auch eine andere Zahl von Sender-Empfänger-Paaren vorgesehen sein. Insbesondere kann nur ein Sender-Empfänger-Paar vorgesehen sein. Der optische Sender 5 bildet dann eine Lichtschranke. Prinzipiell kann eine derartige Lichtschranke auch als Datenlichtschranke ausgebildet sein.

Vorteilhaft erfolgt über die Lichtstrahlen 4 eines Sende-Empfänger-Paars eine optische Synchronisierung, wobei die Sender-Empfänger-Paare zyklisch einzeln nacheinander aktiviert werden.

Wie die Figuren 1a, 1b zeigen, verlaufen die Lichtstrahlen 4 und damit die optischen Achsen der Sender 5 parallel in Abstand zueinander. Auch die optischen Achsen der Empfänger 6 verlaufen parallel im Abstand zueinander.

Bei freiem Überwachungsbereich treffen die durch die Austrittsfenster 3a, 3b, 10a der Sensoreinheiten 1a, 1b geführten Lichtstrahlen 4 aller Sender 5 ungehindert auf den zugeordneten Empfänger 6. Bei einem Objekteingriff im Überwachungsbereich werden die Lichtstrahlen 4 wenigstens eines Senders 5 unterbrochen. In der Auswerteeinheit wird abhängig von den Empfangssignalen der Empfänger 6 ein Objektfeststellungssignal in Form eines binären Schaltsignals generiert, wobei die Schaltzustände der Schaltsignale angeben, ob sich ein Objekt im Überwachungsbereich befindet oder nicht.

Für den Fall, dass der optische Sensor einen Sicherheitssensor ausbildet, der für den Einsatz im Bereich der Sicherheitstechnik geeignet ist, weist dessen Auswerteeinheit einen fehlersicheren Aufbau auf, beispielsweise in Form zweier sich gegenseitig überwachender Rechnereinheiten.

Erfindungsgemäß sind an den Sensoreinheiten 1a, 1b mechanische Ausrichtstrukturen 7a, 7b vorhanden, mittels derer eine Ausrichtung der Sensoreinheiten 1a, 1b ermöglicht wird. Wie die Figuren 1a, 1b zeigen, ist an jeder Sensoreinheit 1a, 1b eine mechanische Ausrichtstruktur 7a, 7b vorhanden. Prinzipiell kann auch nur an einer Sensoreinheit 1a, 1b eine mechanische Ausrichtstruktur 7a, 7b vorhanden sein. Im vorliegenden Fall ist jede mechanische Ausrichtstruktur 7a, 7b an der Oberseite einer Sensoreinheit 1a, 1b angeordnet. Alternativ oder zusätzlich kann eine mechanische Ausrichtstruktur 7a, 7b auch an einer Seitenwand einer Sensoreinheit 1a, 1b vorgesehen sein.

Die Figuren 2a, 2b zeigen ein Ausführungsbeispiel eines optischen Sensors in Form einer Reflexions-Lichtschranke 8, die zur Erfassung von Objekten in einem Überwachungsbereich dient. Die Reflexions-Lichtschranke 8 weist zwei an gegenüberliegenden Rändern des Überwachungsbereichs angeordnete Sensoreinheiten 8a, 8b auf. Die Reflexions-Lichtschranke 8 weist eine erste Sensoreinheit 8a auf, deren Sensorkomponenten in einem Gehäuse 9a mit Austrittsfenster 10a integriert sind.

In dem Gehäuse 9a befinden sich ein Lichtstrahlen 4 emittierender Sender 5, ein Lichtstrahlen 4 empfangender Empfänger 6 und eine nicht dargestellte Auswerteeinheit, die zur Steuerung des Senders 5 und Empfängers 6 dient und in welcher die Empfangssignale zur Generierung eines Objektfeststellungssignals ausgewertet werden, wobei das Objektfeststellungssignal wieder ein binäres Schaltsignal ist. Die Sender 5 emittieren wieder Lichtstrahlen 4 im nichtsichtbaren Wellenlängenbereich. Die optischen Achsen des Senders 5 und Empfängers 6 verlaufen parallel zueinander.

Die zweite Sensoreinheit 8b ist von einem Reflektor gebildet. Der Reflektor ist in einem Rahmen gelagert und weist eine ebene Reflektorfläche 11 auf, deren Normalenvektor die optische Achse des Reflektors bildet.

Bei freiem Überwachungsbereich werden die Lichtstrahlen 4 des Senders 5 durch das Austrittsfenster 10a in den Überwachungsbereich geführt, treffen auf den Reflektor und werden von dort so zurückreflektiert, dass sie durch das Austrittsfenster 10a zum Empfänger 6 geführt werden. Bei einem Objekteingriff im Überwachungsbereich wird der Strahlengang der Lichtstrahlen 4 unterbrochen.

Der optische Sensor gemäß den Figuren 2a, 2b kann auch einen Distanzsensor ausbilden. Dann erfolgt mit den Lichtstrahlen 4 des Senders 5 eine Distanzmessung gegen einen Reflektor oder gegen ein Objekt mit diffusen Reflexionseigenschaften, wobei die Distanzmessung nach einem Impuls-Laufzeit-Verfahren oder Phasenmessverfahren erfolgen kann.

Der optische Sensor gemäß den Figuren 2a, 2b kann auch als Reflexions-Lichtvorhang weitergebildet sein, in dem in der ersten Sensoreinheit 1a mehrere Sender-Empfänger-Paare angeordnet sind.

In Übereinstimmung mit der Ausführungsform gemäß den Figuren 1a, 1b sind auch bei der Ausführungsform der Figuren 2a, 2b an den Sensoreinheiten 8a, 8b mechanische Ausrichtstrukturen 7a, 7b vorhanden.

Jede mechanische Ausrichtstruktur 7a, 7b weist eine Zielgeometrie 12 auf. Die Zielgeometrie 12 verläuft entlang einer Linie, die in Richtung der oder einer optischen Achse der Sensoreinheiten 1a, 1b, 8a, 8b orientiert ist, insbesondere parallel zu dieser verläuft.

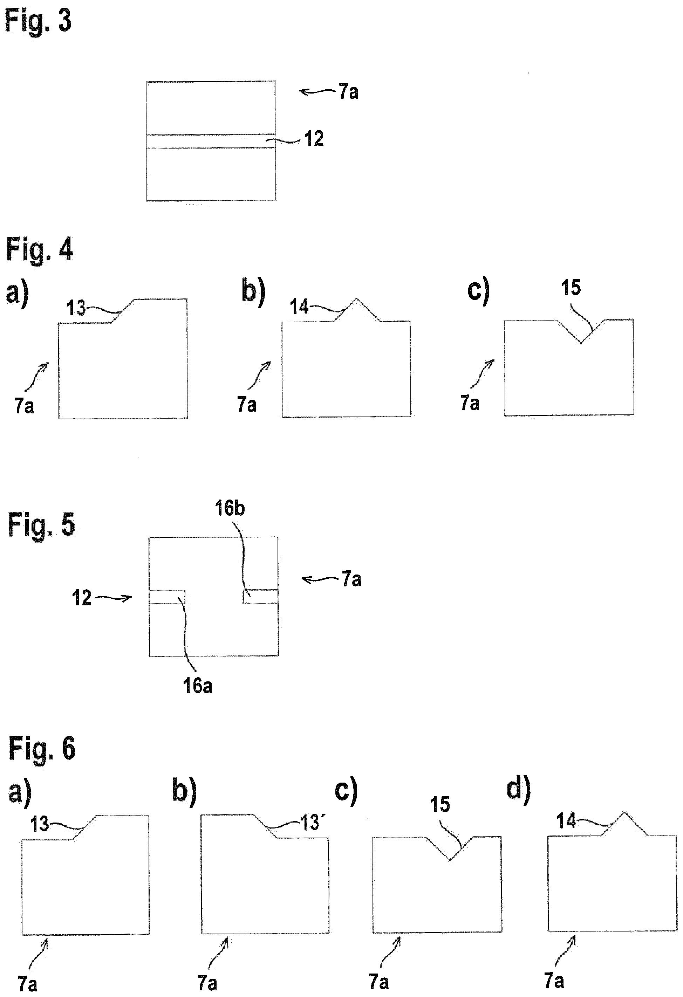

Figur 3 zeigt eine Draufsicht auf die mechanische Ausrichtstruktur 7a, wobei die mechanische Ausrichtstruktur 7b vorzugsweise hierzu entsprechend ausgebildet ist. Die Zielgeometrie 12 gemäß Figur 3 ist linienförmig ausgebildet und erstreckt sich über die gesamte Ausdehnung der Sensoreinheiten 1a, 1b, 8a, 8b in Richtung deren optischer Achse. Die Seitenflächen der Sensoreinheiten 1a, 1b, 8a, 8b, auf welcher eine mechanische Ausrichtstruktur 7a, 7b befestigt ist, bilden vorteilhaft eine ebene Fläche, so dass die linienförmige Zielgeometrie 12 entlang einer Geraden verläuft.

Generell ist es vorteilhaft, wenn sich die Zielgeometrie 12 einer mechanischen Ausrichtstruktur über den Großteil der in Richtung der optischen Achse verlaufenden Ausdehnung der Seitenwand der Sensoreinheit 1a, 1b, 8a, 8b erstreckt.

Dabei bedeutet Großteil vorteilhaft eine Ausdehnung der Zielgeometrie 12 über wenigstens 30% der Ausdehnung der Sensoreinheiten 1a, 1b, 8a, 8b.

Der Querschnitt der Zielgeometrie 12 ist vorteilhaft über deren Länge konstant. Vorteilhaft bildet dabei die Zielgeometrie 12 eine Kerben- oder Kantenstruktur aus.

Die Figuren 4a bis 4c zeigen drei Ausführungsformen von Querschnitten der Zielgeometrie 12. Der Querschnitt gemäß Figur 4a bildet eine Kante 13 aus. Der Querschnitt gemäß Figur 4b weist einen eine Kantenstruktur bildenden Vorsprung 14 aus. Der Querschnitt gemäß Figur 4c bildet eine V-förmige Kerbe 15 aus.

Figur 5 zeigt eine Draufsicht auf eine mechanische Ausrichtstruktur 7a, mit einer weiteren Ausführungsform einer Zielgeometrie 12, bestehend aus den Zielgeometrieelementen 16a und 16b. Die unterbrochene Zielgeometrie 12 erleichtert die Ausrichtung, da die Zielgeometrieelemente 16a, 16b als auch das optische Ziel in Deckung gebracht werden sollen, und dadurch eine Fehlausrichtung schneller erkannt wird und korrigiert werden kann. Diese Zielgeometrie 12 kann auch bei der mechanischen Ausrichtstruktur 7b vorhanden sein. Eine derartige Zielgeometrie kann auch dann angewendet werden, wenn beispielsweise bereits vorhandene Elemente verwendet werden. Diese können beispielsweise Schraubenköpfe oder andere bereits vorhandene Befestigungselemente oder Strukturen sein.

Auch die Zielgeometrie 12 gemäß Figur 5 verläuft entlang einer Linie, die parallel zu der oder einer optischen Achse der zugeordneten Sensoreinheiten 1a, 1b, 8a, 8b verläuft.

Im vorliegenden Fall bildet die Zielgeometrie 12 jedoch keine durchgehende Linienstruktur. Die Zielgeometrie 12 besteht im vorliegenden Fall aus zwei diskreten Zielgeometrieelementen 16a, 16b, die entlang einer parallel zur optischen Achse verlaufenden Geraden angeordnet sind. In diesem Falle ist es ebenfalls vorteilhaft, wenn sich die Zielgeometrieelemente 16a, 16b über den Großteil der in Richtung der optischen Achse verlaufenden Ausdehnung der Seitenwand der Sensoreinheit 1a, 1b, 8a, 8b erstreckt. Dabei bedeutet Großteil vorteilhaft eine Ausdehnung der Zielgeometrie über wenigstens 30% der Ausdehnung der Sensoreinheiten 1a, 1b, 8a, 8b.

Die Querschnitte der Zielgeometrieelemente 16a, 16b in Längsrichtung der Zielgeometrie 12 sind wieder konstant. Die Figuren 6a, 6b zeigen zwei Ausführungsformen von Querschnitten von Zielgeometrieelementen 16a, die jeweils eine Kante 13, 13' ausbilden. Die Figuren 6c, 6d zeigen zwei Ausführungsformen von Querschnitten von Zielgeometrieelementen 16b, die eine Kerbe 15 oder einen Vorsprung 14 ausbilden.

Die Funktionsweise der Ausrichtung der Sensoreinheiten 1b, des Lichtvorhangs 1 wird anhand der Figuren 1a, 1b erläutert, wobei Entsprechendes für die Reflexions-Lichtschranke 8 gemäß den Figuren 2a, 2b gilt.

Wie in Figur 1a veranschaulicht, nutzt ein Benutzer die mechanische Ausrichtstruktur 7a zur Ausrichtung der Sensoreinheit 1a auf die gegenüberliegende Sensoreinheit 1b. Der Benutzer visiert die Zielgeometrie 12 der mechanischen Ausrichtstruktur an (angedeutet durch die gestrichelte Linie) und zielt damit auf einen Zielpunkt der gegenüberliegenden Sensoreinheit 1b, wobei als Zielpunkt vorteilhaft die Zielgeometrie 12 der mechanischen Ausrichtstruktur 7b der Sensoreinheit 1b genutzt wird.

Der Benutzer verstellt die Sensoreinheit 1a solange, bis er mit der Zielgeometrie 12 der mechanischen Ausrichtstruktur 7a genau einen Zielpunkt der gegenüberliegenden Sensoreinheit 1b anvisiert hat. Da die Zielgeometrie 12 der mechanischen Ausrichtstruktur 7a in Richtung der optischen Achsen der Sender 5 verläuft, sind durch dieses Anvisieren die optischen Achsen auf den Zielpunkt der gegenüberliegenden Sensoreinheit 1b ausgerichtet.

Entsprechend kann ein Benutzer unter Nutzung der Zielgeometrie 12 der mechanischen Ausrichtstruktur 7a die Sensoreinheit 1b auf die Sensoreinheit 1a ausrichten (Figur 1b).

Bei der Ausführungsform der Figur 3 bildet die Zielgeometrie 12 eine durchgehende Linie, die vom Benutzer anvisiert wird.

Bei der Ausführungsform der Figur 5 visiert der Benutzer beide Zielgeometriekanäle nach dem Kimme-Korn-Prinzip an.

### Bezugszeichenliste

- (1): Lichtvorhang
- (1a): Sensoreinheit
- (1b): Sensoreinheit
- (2a): Gehäuse
- (2b): Gehäuse
- (3a): Austrittsfenster
- (3b): Austrittsfenster
- (4): Lichtstrahl
- (5): Sender
- (6): Empfänger
- (7a): mechanische Ausrichtstruktur
- (7b): mechanische Ausrichtstruktur
- (8): Reflexions-Lichtschranke
- (8a): Sensoreinheit
- (8b): Sensoreinheit
- (9a): Gehäuse
- (10a): Austrittsfenster
- (11): Reflektorfläche
- (12): Zielgeometrie
- (13): Kante
- (13'): Kante
- (14): Vorsprung
- (15): Kerbe
- (16a): Zielgeometrieelement
- (16b): Zielgeometrieelement

## Patentansprüche

1. Optischer Sensor mit wenigstens einem Lichtstrahlen (4) emittierenden Sender (5), wenigstens einem Lichtstrahlen (4) empfangenden Empfänger (6) und einer Auswerteeinheit, welche zur Auswertung von Empfangssignalen des wenigstens eines Empfängers (6) ausgebildet ist, wobei zwei in Abstand gegenüberliegend angeordneten Sensoreinheiten (1a, 1b, 8a, 8b) vorhanden sind, in welchen der wenigstens eine Sender und wenigstens eine Empfänger und die Auswerteeinheit integriert sind, wobei die Lichtstrahlen (4) zwischen den Sensoreinheiten (1a, 1b, 8a, 8b) verlaufen, wobei an wenigstens einer Seitenwand wenigstens einer Sensoreinheit (1a, 1b, 8a, 8b) eine mechanische Ausrichtstruktur (7a, 7b) vorhanden ist, die eine anvisierbare, in Richtung einer optischen Achse dieser Sensoreinheit (1a, 1b, 8a, 8b) verlaufende Zielgeometrie (12), ausbildet, **dadurch gekennzeichnet, dass** die optische Achse einer Sensoreinheit (1a, 1b, 8a), in deren Richtung die Zielgeometrie (12) einer mechanischen Ausrichtstruktur verläuft, von einer optischen Achse eines Senders (5) oder Empfängers (6) gebildet ist.

2. Optischer Sensor nach Anspruch 1, **dadurch gekennzeichnet, dass** an jeder Sensoreinheit (1a, 1b, 8a, 8b) wenigstens eine mechanische Ausrichtstruktur (7a, 7b) vorhanden ist.

3. Optischer Sensor nach einem der Ansprüche 1 oder 2, **dadurch gekennzeichnet, dass** jede Sensoreinheit (1a, 1b, 8a, 8b) eine Frontseite aufweist, über welche die Lichtstrahlen (4) geführt sind, und dass die oder jede mechanische Ausrichtstruktur (7a, 7b) an einer an die Frontseite angrenzenden Seitenwand einer Sensoreinheit (1a, 1b, 8a, 8b) vorhanden ist.

4. Optischer Sensor nach einem der Ansprüche 1 bis 3, **dadurch gekennzeichnet, dass** die oder jede Seitenwand einer Sensoreinheit (1a, 1b, 8a, 8b), an welcher die mechanische Ausrichtstruktur (7a, 7b) vorhanden ist, eine ebene Fläche ausbildet.

5. Optischer Sensor nach einem der Ansprüche 1 bis 4, **dadurch gekennzeichnet, dass** dieser eine erste Sensoreinheit (1a), in welcher wenigstens ein Lichtstrahlen (4) emittierender Sender (5) vorhanden ist, und eine zweite Sensoreinheit (1b), in welcher ein Lichtstrahlen (4) empfangender Empfänger (6) vorhanden ist, aufweist.

6. Optischer Sensor nach Anspruch 5, **dadurch gekennzeichnet, dass** jede Sensoreinheit (1a, 1b, 8a, 8b) ein Gehäuse (2a, 2b, 9a) aufweist, wobei an wenigstens einer Seitenwand wenigstens eines Gehäuses (2a, 2b, 9a) eine mechanische Ausrichtstruktur (7a, 7b) vorhanden ist.

7. Optischer Sensor nach einem der Ansprüche 1 bis 4, **dadurch gekennzeichnet, dass** dieser eine erste Sensoreinheit (8a) aufweist, in welcher wenigstens ein Lichtstrahlen (4) emittierender Sender (5) und wenigstens ein Lichtstrahlen (4) empfangender Empfänger (6) vorhanden sind, und dass eine zweite Sensoreinheit (8b) von einem Reflektor gebildet ist.

8. Optischer Sensor nach Anspruch 7, **dadurch gekennzeichnet, dass** die erste Sensoreinheit (1a) ein Gehäuse (9a) aufweist, wobei an wenigstens einer Seitenwand des Gehäuses (9a) eine mechanische Ausrichtstruktur (7a) vorhanden ist, und/oder dass an einem Rahmen des Reflektors eine mechanische Ausrichtstruktur (7b) vorhanden ist.

9. Optischer Sensor nach Anspruch 7, **dadurch gekennzeichnet, dass** die optische Achse einer Sensoreinheit (8b), in deren Richtung die Zielgeometrie (12) einer mechanischen Ausrichtstruktur verläuft, von der optischen Achse des Reflektors gebildet ist.

10. Optischer Sensor nach Anspruch 9, **dadurch gekennzeichnet, dass** der Reflektor eine ebene Reflektorfläche (11) aufweist, wobei der Normalenvektor der Reflektorfläche (11) die optische Achse des Reflektors bildet.

11. Optischer Sensor nach einem der Ansprüche 1 bis 10, **dadurch gekennzeichnet, dass** die Zielgeometrie (12) von einer Kerben- und/oder Kantenstruktur gebildet ist.

12. Optischer Sensor nach Anspruch 11, **dadurch gekennzeichnet, dass** die Zielgeometrie (12) von einer in Richtung der optischen Achse verlaufenden, kontinuierlichen Kerben- oder Kantenstruktur gebildet ist.

13. Optischer Sensor nach Anspruch 11, **dadurch gekennzeichnet, dass** die Zielgeometrie (12) mehrere in Richtung der optischen Achse hintereinander angeordnete, diskrete Zielgeometrieelemente (16a, 16b) aufweist, die eine Kerben- oder Kantenstruktur aufweisen.

14. Optischer Sensor nach Anspruch 13, **dadurch gekennzeichnet, dass** diskrete Zielgeometrieelemente (16a, 16b) aus Gehäuse- oder Befestigungselementen gebildet sind.

15. Optischer Sensor nach einem der Ansprüche 1 bis 14, **dadurch gekennzeichnet, dass** sich die Zielgeometrie (12) einer mechanischen Ausrichtstruktur über den Großteil der in Richtung der optischen Achse verlaufenden Ausdehnung der Seitenwand der Sensoreinheit (1a, 1b, 8a, 8b) erstreckt.

16. Optischer Sensor nach einem der Ansprüche 1 bis 15, **dadurch gekennzeichnet, dass** der oder die Sender (5) Lichtstrahlen (4) im nichtsichtbaren Wellenlängenbereich emittieren.

17. Optischer Sensor nach einem der Ansprüche 1 bis 16, **dadurch gekennzeichnet, dass** mittels der mechanischen Ausrichtstruktur (7a, 7b) eine Grobausrichtung der Sensoreinheiten (1a, 1b, 8a, 8b) durchgeführt wird, und dass Mittel zur Feinjustage der Sensoreinheiten (1a, 1b, 8a, 8b) vorhanden sind.

18. Optischer Sensor nach einem der Ansprüche 1 bis 17, **dadurch gekennzeichnet, dass** dieser zur Erfassung von Objekten in einem Überwachungsbereich ausgebildet ist, wobei die Sensoreinheiten (1a, 1b, 8a, 8b) an gegenüberliegenden Rändern des Überwachungsbereichs angeordnet sind.

19. Optischer Sensor nach Anspruch 17, **dadurch gekennzeichnet, dass** Objekte durch Unterbrechung des Strahlengangs von Lichtstrahlen (4) erfasst werden.

20. Optischer Sensor nach einem der Ansprüche 7 bis 17, **dadurch gekennzeichnet, dass** dieser ein Distanzsensor ausbildet.

21. Optischer Sensor nach einem der Ansprüche 5 bis 17, **dadurch gekennzeichnet, dass** dieser eine Datenlichtschranke ausbildet.

22. Verfahren zum Betrieb eines optischen Sensors mit wenigstens einem Lichtstrahlen (4) emittierenden Sender (5), wenigstens einem Lichtstrahlen (4) empfangenden Empfänger (6) und einer Auswerteeinheit, welche zur Auswertung von Empfangssignalen des wenigstens eines Empfängers (6) ausgebildet ist, wobei zwei in Abstand gegenüberliegend angeordneten Sensoreinheiten (1a, 1b, 8a, 8b) vorhanden sind, in welchen der wenigstens eine Sender und der wenigstens eine Empfänger und die Auswerteeinheit integriert sind, wobei die Lichtstrahlen (4) zwischen den Sensoreinheiten (1a, 1b, 8a, 8b) verlaufen, wobei an wenigstens einer Seitenwand wenigstens einer Sensoreinheit (1a, 1b, 8a, 8b) eine mechanische Ausrichtstruktur (7a, 7b) vorhanden ist, die eine anvisierbare, in Richtung einer optischen Achse dieser Sensoreinheit (1a, 1b, 8a, 8b) verlaufende Zielgeometrie (12) ausbildet, **dadurch gekennzeichnet, dass** die optische Achse einer Sensoreinheit (1a, 1b, 8a), in deren Richtung die Zielgeometrie (12) einer mechanischen Ausrichtstruktur verläuft, von einer optischen Achse eines Senders (5) oder Empfängers (6) gebildet ist.

## Claims

1. An optical sensor comprising at least one transmitter (5) emitting light beams (4), at least one receiver (6) receiving light beams (4), and an evaluation unit configured to evaluate received signals from said at least one receiver (6), wherein two sensor units (1a, 1b, 8a, 8b) are present, in which said at least one transmitter and at least one receiver and the evaluation unit are integrated, wherein the light beams (4) run between the sensor units (1a, 1b, 8a, 8b), wherein a mechanical alignment structure (7a, 7b) is provided on at least one side wall of at least one sensor unit (1a, 1b, 8a, 8b), which forms a target geometry (12) that can be aligned in the direction of an optical axis of this sensor unit (1a, 1b, 8a, 8b), **characterised in that** the optical axis of a sensor unit (1a, 1b, 8a) in the direction of which the target geometry (12) of a mechanical alignment structure extends is formed by an optical axis of a transmitter (5) or receiver (6).

2. Optical sensor according to claim 1, **characterised in that** at least one mechanical alignment structure (7a, 7b) is provided on each of the sensor units (1a, 1b, 8a, 8b).

3. Optical sensor according to one of claims 1 or 2, **characterised in that** each sensor unit (1a, 1b, 8a, 8b) has a front face through which the light beams (4) are guided, and that the or each mechanical alignment structure (7a, 7b) is provided on a side wall of a sensor unit (1a, 1b, 8a, 8b) adjacent to the front face.

4. An optical sensor according to any one of claims 1 to 3, **characterised in that** the or each side wall of a sensor unit (1a, 1b, 8a, 8b) on which the mechanical alignment structure (7a, 7b) is provided forms a flat surface.

5. An optical sensor according to any one of claims 1 to 4, **characterised in** th , this sensor comprises a first sensor unit (1a), in which at least one transmitter (5) emitting a light beam (4) is provided, and a second sensor unit (1b), in which a receiver (6) receiving a light beam (4) is provided.

6. Optical sensor according to claim 5, **characterised in that** each sensor unit (1a, 1b, 8a, 8b) comprises a housing (2a, 2b, 9a), wherein a mechanical alignment structure (7a, 7b) is provided on at least one side wall of at least one housing (2a, 2b, 9a).

7. An optical sensor according to any one of claims 1 to 4, **characterised in that** it comprises a first sensor unit (8a) in which at least one transmitter (5) emitting a light beam (4) and at least one receiver (6) receiving a light beam (4) are provided, and **in that** a second sensor unit (8b) is formed by a reflector.

8. Optical sensor according to claim 7, **characterised in that** the first sensor unit (8a) comprises a housing (9a), wherein a mechanical alignment structure (7a) is provided on at least one side wall of the housing (9a), and/or that a mechanical alignment structure (7b) is provided on a frame of the reflector.

9. Optical sensor according to claim 7, **characterised in that** the optical axis of a sensor unit (8b), in the direction of which the target geometry (12) of a mechanical alignment structure extends, is formed by the optical axis of the reflector.

10. Optical sensor according to claim 9, **characterised in that** the reflector has a flat reflector surface (11), wherein the normal vector of the reflector surface (11) forms the optical axis of the reflector.

11. Optical sensor according to any one of claims 1 to 10, **characterised in that** the target geometry (12) is formed by a notched and/or edged structure.

12. Optical sensor according to claim 11, **characterised in that** the target geometry (12) is formed by a continuous notch or edge structure extending in the direction of the optical axis.

13. Optical sensor according to claim 11, **characterised in that** the target geometry (12) comprises a plurality of discrete target geometry elements (16a, 16b) arranged in succession in the direction of the optical axis, which have a notch or edge structure.

14. Optical sensor according to claim 13, **characterised in that** discrete target geometry elements (16a, 16b) are formed from housing or fastening elements.

15. An optical sensor according to any one of claims 1 to 14, **characterised in that** the target geometry (12) of a mechanical alignment structure extends over the majority of the side wall of the sensor unit (1a, 1b, 8a, 8b) extending in the direction of the optical axis.

16. Optical sensor according to any one of claims 1 to 15, **characterised in that** the transmitter(s) (5) emit light beams (4) in the non-visible wavelength range.

17. An optical sensor according to any one of claims 1 to 16, **characterised in that** a coarse alignment of the sensor units (1a, 1b, 8a, 8b) is carried out by means of the mechanical alignment structure (7a, 7b), and **in that** means for fine adjustment of the sensor units (1a, 1b, 8a, 8b) are provided.

18. An optical sensor according to any one of claims 1 to 17, **characterised in that** it is designed to detect objects within a monitoring area, wherein the sensor units (1a, 1b, 8a, 8b) are arranged at opposite edges of the monitoring area.

19. An optical sensor according to claim 17, **characterised in that** objects are detected by interruption of the path of light beams (4).

20. An optical sensor according to any one of claims 7 to 17, **characterised in that** it forms a distance sensor.

21. An optical sensor according to any one of claims 5 to 17, **characterised in that** it forms a data light barrier.

22. A method for operating an optical sensor comprising at least one transmitter (5) emitting light beams (4), at least one receiver (6) receiving light beams (4), and an evaluation unit configured to evaluate reception signals from said at least one receiver (6), wherein two sensor units (1a, 1b, 8a, 8b) are present , in which said at least one transmitter and said at least one receiver and the evaluation unit are integrated, wherein the light beams (4) travel between the sensor units (la, lb, 8a, 8b), wherein a mechanical alignment structure (7a, 7b) is provided on at least one side wall of at least one sensor unit (1a, 1b, 8a, 8b), which forms a target geometry (12) that can be aligned in the direction of an optical axis of this sensor unit (1a, 1b, 8a, 8b), **characterised in that** the optical axis of a sensor unit (1a, 1b, 8a), in the direction of which the target geometry (12) of a mechanical alignment structure extends, is formed by an optical axis of a transmitter (5) or receiver (6).

## Revendications

1. Capteur optique comprenant au moins un émetteur (5) émettant des faisceaux lumineux (4), au moins un récepteur (6) recevant des faisceaux lumineux (4), et une unité d'évaluation configurée pour évaluer les signaux reçus provenant dudit au moins un récepteur (6), dans lequel deux unités de capteur (1a, 1b, 8a, 8b) sont présentes, dans lesquelles ledit au moins un émetteur et ledit au moins un récepteur ainsi que l'unité d'évaluation sont intégrés, dans lequel les faisceaux lumineux (4) circulent entre les unités de capteur (1a, 1b, 8a, 8b), dans lequel une structure d'alignement mécanique (7a, 7b) est prévue sur au moins une paroi latérale d'au moins une unité de capteur (1a, 1b, 8a, 8b), qui forme une géométrie cible (12) pouvant être alignée dans la direction d'un axe optique de cette unité de capteur (1a, 1b, 8a, 8b), **caractérisé en ce que** l'axe optique d'une unité de capteur (1a, 1b, 8a) dans la direction de laquelle s'étend la géométrie cible (12) d'une structure d'alignement mécanique est formé par un axe optique d'un émetteur (5) ou d'un récepteur (6).

2. Capteur optique selon la revendication 1, **caractérisé en ce qu'**au moins une structure d'alignement mécanique (7a, 7b) est prévue sur chacune des unités de capteur (1a, 1b, 8a, 8b).

3. Capteur optique selon l'une des revendications 1 ou 2, **caractérisé en ce que** chaque unité de capteur (1a, 1b, 8a, 8b) comporte une face avant à travers laquelle les faisceaux lumineux (4) sont guidés, et **en ce que** la ou chaque structure d'alignement mécanique (7a, 7b) est prévue sur une paroi latérale d'une unité de capteur (1a, 1b, 8a, 8b) adjacente à la face avant.

4. Capteur optique selon l'une quelconque des revendications 1 à 3, **caractérisé en ce que** la ou chaque paroi latérale d'une unité de capteur (1a, 1b, 8a, 8b) sur laquelle est prévue la structure d'alignement mécanique (7a, 7b) forme une surface plane.

5. Capteur optique selon l'une quelconque des revendications 1 à 4, **caractérisé en ce que** ce capteur comprend une première unité de capteur (1a), dans laquelle est prévu au moins un émetteur (5) émettant un faisceau lumineux (4), et une seconde unité de capteur (1b), dans laquelle est prévu un récepteur (6) recevant un faisceau lumineux (4).

6. Capteur optique selon la revendication 5, **caractérisé en ce que** chaque unité de capteur (1a, 1b, 8a, 8b) comprend un boîtier (2a, 2b, 9a), dans lequel une structure d'alignement mécanique (7a, 7b) est prévue sur au moins une paroi latérale d'au moins un boîtier (2a, 2b, 9a).

7. Capteur optique selon l'une quelconque des revendications 1 à 4, **caractérisé en ce qu'**il comprend une première unité de capteur (8a) dans laquelle sont prévus au moins un émetteur (5) émettant un faisceau lumineux (4) et au moins un récepteur (6) recevant un faisceau lumineux (4), et **en ce qu'**une seconde unité de capteur (8b) est formée par un réflecteur.

8. Capteur optique selon la revendication 7, **caractérisé en ce que** la première unité de capteur (8a) comprend un boîtier (9a), dans lequel une structure d'alignement mécanique (7a) est prévue sur au moins une paroi latérale du boîtier (9a), et/ou **en ce qu'**une structure d'alignement mécanique (7b) est prévue sur un cadre du réflecteur.

9. Capteur optique selon la revendication 7, **caractérisé en ce que** l'axe optique d'une unité de capteur (8b), dans la direction de laquelle s'étend la géométrie cible (12) d'une structure d'alignement mécanique, est formé par l'axe optique du réflecteur.

10. Capteur optique selon la revendication 9, **caractérisé en ce que** le réflecteur présente une surface de réflexion plane (11), le vecteur normal de la surface de réflexion (11) formant l'axe optique du réflecteur.

11. Capteur optique selon l'une quelconque des revendications 1 à 10, **caractérisé en ce que** la géométrie cible (12) est formée par une structure à encoche et/ou à arête.

12. Capteur optique selon la revendication 11, **caractérisé en ce que** la géométrie de la cible (12) est formée par une structure continue à encoches ou à arêtes s'étendant dans la direction de l'axe optique.

13. Capteur optique selon la revendication 11, **caractérisé en ce que** la géométrie de la cible (12) comprend une pluralité d'éléments de géométrie de cible discrets (16a, 16b) disposés successivement dans la direction de l'axe optique, qui présentent une structure en entaille ou en arête.

14. Capteur optique selon la revendication 13, **caractérisé en ce que** les éléments de géométrie cible discrets (16a, 16b) sont formés à partir d'éléments de boîtier ou de fixation.

15. Capteur optique selon l'une quelconque des revendications 1 à 14, **caractérisé en ce que** la géométrie de cible (12) d'une structure d'alignement mécanique s'étend sur la majeure partie de la paroi latérale de l'unité de capteur (1a, 1b, 8a, 8b) s'étendant dans la direction de l'axe optique.

16. Capteur optique selon l'une quelconque des revendications 1 à 15, **caractérisé en ce que** le ou les émetteurs (5) émettent des faisceaux lumineux (4) dans la gamme de longueurs d'onde non visibles.

17. Capteur optique selon l'une quelconque des revendications 1 à 16, **caractérisé en ce qu'**un alignement grossier des unités de capteur (1a, 1b, 8a, 8b) est effectué au moyen de la structure d'alignement mécanique (7a, 7b), et **en ce que** des moyens de réglage fin des unités de capteur (1a, 1b, 8a, 8b) sont prévus.

18. Capteur optique selon l'une quelconque des revendications 1 à 17, **caractérisé en ce qu'**il est conçu pour détecter des objets à l'intérieur d'une zone de surveillance, dans lequel les unités de capteur (1a, 1b, 8a, 8b) sont disposées aux bords opposés de la zone de surveillance.

19. Capteur optique selon la revendication 17, **caractérisé en ce que** les objets sont détectés par interruption du trajet des faisceaux lumineux (4).

20. Capteur optique selon l'une quelconque des revendications 7 à 17, **caractérisé en ce qu'**il forme un capteur de distance.

21. Capteur optique selon l'une quelconque des revendications 5 à 17, **caractérisé en ce qu'**il forme une barrière lumineuse de données.

22. Procédé de fonctionnement d'un capteur optique comprenant au moins un émetteur (5) émettant des faisceaux lumineux (4), au moins un récepteur (6) recevant des faisceaux lumineux (4), et une unité d'évaluation configurée pour évaluer les signaux de réception provenant dudit au moins un récepteur (6), dans lequel deux unités de capteur (1a, 1b, 8a, 8b) sont présentes, dans lesquelles ledit au moins un émetteur, ledit au moins un récepteur et l'unité d'évaluation sont intégrés, dans lequel les faisceaux lumineux (4) se propagent entre les unités de capteur (1a, 1b, 8a, 8b), dans lequel une structure d'alignement mécanique (7a, 7b) est prévue sur au moins une paroi latérale d'au moins une unité de capteur (1a, 1b, 8a, 8b), qui forme une géométrie cible (12) pouvant être alignée dans la direction d'un axe optique de cette unité de capteur (1a, 1b, 8a, 8b), **caractérisé en ce que** l'axe optique d'une unité de capteur (1a, 1b, 8a), dans la direction de laquelle s'étend la géométrie cible (12) d'une structure d'alignement mécanique, est formé par un axe optique d'un émetteur (5) ou d'un récepteur (6).
